# EUROPÄISCHE PATENTANMELDUNG

(11) **EP 2 213 201 A2**
(43) Veröffentlichungstag der Anmeldung: **04.08.2010**
(21) Anmeldenummer: 10000290.6
(22) Anmeldetag: 14.01.2010
(51) Int. Cl.: A47B 96/20

(54) **Möbelplatte mit Stabilisierungsprofil**

(30) Priorität: 19.01.2009 DE 202009000746 U
(71) Anmelder: Heinrich Rotterdam GmbH & Co. KG, 48624 Schöppingen (DE)
(72) Erfinder: Radespiel, Andreas, 48624 Schöppingen (DE); Kipp, Jürgen, 45768 Marl (DE)
(74) Vertreter: Habbel, Ludwig

(57) **Zusammenfassung**

Bei einer Möbelplatte aus Holz, mit einer Nut, und mit einem in der Nut angeordneten, die Möbelplatte aussteifenden Stabilisierungsprofil, schlägt die Erfindung vor, dass das Stabilisierungsprofil, im Querschnitt gesehen, zwei separate Profilteile mit jeweils einem gebogenen Konturabschnitt aufweist, und dass die Nut Randbereiche aufweist, welche den gebogenen Konturabschnitten der Profilteile anliegen, derart, dass die beiden Profilteile mittels einer Schwenkbewegung aus der Nut herausschwenkbar sind.

## Beschreibung

Die Erfindung betrifft eine Möbelplatte nach dem Oberbegriff des Anspruchs 1.

Gattungsgemäße Möbelplatten sind aus der Praxis bekannt. Die Stabilisierungsprofile dienen beispielsweise dazu, die Möbelplatte gegen Verzug zu stabilisieren. Insbesondere bei Massivholzplatten ist es aufgrund der witterungsabhängigen Ausdehnungen und Schwindungen des Holzes vorteilhaft, derartige Stabilisierungsprofile zu verwenden.

Zudem können die Stabilisierungsprofile auch als Schienen genutzt werden, entlang welcher eine Bewegung möglich ist, beispielsweise die Relativbewegung zweier benachbarter Möbelplatten, wie dies beispielsweise bei Ausziehtischen bekannt ist, wo zusätzlich zu der eigentlichen, stets verwendeten Tischplatte eine oder zwei Verlängerungsplatten bzw. Ausziehplatten vorgesehen sind, die aus einer Ruhestellung, üblicherweise unterhalb der eigentlichen Tischplatte, in eine Gebrauchsstellung verfahren werden können, in welcher sie die eigentliche Tischplatte verlängern.

Um die Stabilisierung der Möbelplatte zu ermöglichen, muss ein fester Verbund zwischen dem Stabilisierungsprofil und der Möbelplatte geschaffen werden.

Der Erfindung liegt die Aufgabe zugrunde, eine gattungsgemäße Möbelplatte dahingehend zu verbessern, dass diese einerseits den gewünschten festen Verbund zwischen Stabilisierungsprofil und der übrigen Möbelplatte sicherstellt, andererseits eine problemlose Demontage des Stabilisierungsprofils ermöglicht.

Diese Aufgabe wird durch eine Möbelplatte mit den Merkmalen des Anspruchs 1 gelöst.

Die Erfindung schlägt mit anderen Worten vor, die sichere Festlegung des Stabilisierungsprofils innerhalb des umgebenden Werkstoffes der Möbelplatte - bevorzugt innerhalb des Massivholzes - nicht durch eine Verklebung oder dergleichen zu ermöglichen, sondern vielmehr eine Verschwenkung des Stabilisierungsprofils. Dabei ist das Stabilisierungsprofil im Querschnitt in mehrere Teile aufgeteilt, wobei wenigstens zwei separate Profilteile vorgesehen sind, die jeweils einen gebogenen Konturabschnitt aufweisen und dementsprechend eine Schwenkbewegung zum Einsetzen in die Nut oder zum Herausnehmen aus der Nut ermöglichen.

Die Schwenkbeweglichkeit beider Profilteile kann insbesondere gegenläufig ausgestaltet sein, so dass sich die beiden Profilteile innerhalb der Nut gegenseitig blockieren. So wird auch ohne aufwendige zusätzliche Befestigungsmittel sichergestellt, dass die Profilteile des Stabilisierungsprofils in ihrer Gebrauchsstellung innerhalb der Nut verbleiben.

Vorteilhaft kann vorgesehen sein, dass die Profilteile in ihrer Gebrauchsstellung regelrecht unter einer Vorspannung stehen. Auf diese Weise wird einerseits besonders zuverlässig sichergestellt, dass sich das Stabilisierungsprofil bzw. ein einzelnes Profilteil davon nicht unerwünscht aus seiner Gebrauchsstellung löst, und durch die Vorspannung wird zudem eine feste Anlage an dem umgebenden Werkstoff der Möbelplatte sichergestellt, so dass ein besonders stabiler Verbund zwischen dem Stabilisierungsprofil und dem umgebenden Werkstoff erfolgt und damit das Stabilisierungsprofil besonders wirksam und zuverlässig die Möbelplatte in der gewünschten Weise stabilisiert.

Soll die Möbelplatte beispielsweise nachbearbeitet werden, sei es im Herstellungswerk oder nach einigen Jahren des Gebrauchs, oder sollte es wünschenswert sein, das Stabilisierungsprofil nachzuarbeiten, beispielsweise wenn es wie anfangs beschrieben auch als Schiene für die Führung beweglicher Anschlusselemente genutzt wird, so kann vorschlagsgemäß das Stabilisierungsprofil besonders einfach aus dem übrigen Werkstoff der Möbelplatte entfernt werden, indem einfach, ggf. unter Überwindung der erwähnten Vorspannkraft, die Profilteile aus der Nut der Möbelplatte herausgeschwenkt werden.

Vorteilhaft kann ein so genannter Steg als drittes Profilteil vorgesehen sein, nämlich als zwischen den beiden Profilteilen - welche eine gebogene Kontur aufweisen - als drittes Teil des Stabilisierungsprofils. Die beiden Profilteile mit gebogenem Konturabschnitt stellen jeweils ein Sonderprofil dar. Zu Gunsten einer möglichst wirtschaftlichen Herstellung sind sie vorzugsweise symmetrisch ausgestaltet und angeordnet, so dass sie letztlich aus einem und demselben Profilstrang abgelängt und symmetrisch zueinander verbaut werden können. In Anpassung an unterschiedlich große Plattenstärken, also an die Materialdicke der jeweiligen Möbelplatte, kann es allerdings wünschenswert sein, unterschiedlich hohe Stabilisierungsprofile, die sich also unterschiedlich weit in die Möbelplatte hinein erstrecken, zu verwenden.

Um dabei nicht mehrere Sonderprofile mit gebogener Außenkontur anfertigen zu müssen, kann der vorteilhaft anwendbare Steg vorgesehen sein: Bei diesem kann es sich vorzugsweise um ein handelsübliches Halbzeug handeln, beispielsweise ein Metallprofil mit rechteckigem Querschnitt, so dass es besonders preisgünstig erhältlich ist. Die Breite dieses Stegs kann stets gleich sein, damit der Steg zwischen den beiden übrigen Profilteilen stets in gleicher Weise angeordnet werden kann und beispielsweise den beiden Profilteilen anliegen kann.

Die Höhe des Stegs jedoch kann sich nach der Plattenstärke der Möbelplatte richten, so dass rein beispielhaft bei einer Möbelplatte mit einer Plattenstärke von 20 mm ein Steg von beispielsweise 10 mm Höhe verwendet werden kann, während bei einer Plattenstärke von 28 mm ein Steg mit einer Höhe von 15 mm verwendet werden kann und bei einer Plattenstärke von 36 mm ein Steg mit einer Höhe von 25 mm, um den bei den größeren Plattenstärken höheren auftretenden Kräften entsprechend entgegenwirken zu können und die Möbelplatte wunschgemäß auszusteifen.

Um eine Führung für die gebogenen Konturabschnitte der beiden Profilteile zu schaffen, kann vorteilhaft vorgesehen sein, dass die Nut in der Möbelplatte Randbereiche aufweist, welche zu den gebogenen Konturabschnitten der Profilteile korrespondierend gebogen sind und welche den gebogenen Abschnitten der Profilteile vollflächig anliegen. Statt nur einen linienförmigen Kontakt zwischen den Profilteilen und dem umgebenden Plattenwerkstoff zu schaffen, wird durch diesen vollflächigen Kontakt eine möglichst geringe Flächenpressung zwischen Stabilisierungsprofil und umgebendem Werkstoff sichergestellt, so dass Verformungen des umgebenden Werkstoffes der Möbelplatte möglichst vermieden werden können, die ansonsten den festen Sitz des Stabilisierungsprofils in der Möbelplatte gefährden könnten.

Vorteilhaft kann wenigstens eines der beiden Profilteile eine Längsnut aufweisen, um einen Nutstein aufnehmen und führen zu können. In an sich bekannter Weise kann dabei vorteilhaft vorgesehen sein, den Nutstein verliersicher innerhalb der Nut aufzunehmen, indem die Nut eine entsprechende Hinterschneidung aufweist.

Dabei kann vorteilhaft vorgesehen sein, dass beide Profilteile eine derartige Längsnut aufweisen. Insbesondere, wenn wirtschaftlich vorteilhaft beide Profilteile aus dem gleichen Strangpressprofil gebildet sind, ist dies ja ohnehin gegeben und die beiden vorhandenen Längsnuten können vorteilhaft dazu verwendet werden, den sicheren Halt des Stabilisierungsprofils innerhalb der Möbelplatte sicherzustellen: Wenn ein Beschlagelement vorgesehen ist, welches wenigstens zwei Nutsteine aufweist und wenn nicht beide Nutsteine in der selben Längsnut des selben Profilteils angeordnet sind, sondern vielmehr in den beiden Längsnuten der beiden parallel verlaufenden Profilteile, so wird durch die beiden Nutsteine und das Beschlagelement eine Art Brücke zwischen den beiden Profilteilen geschaffen. Aufgrund der unterschiedlichen, beispielsweise gegenläufigen, erforderlichen Bewegungsabläufe zum Verschwenken der beiden Profilteile wird durch diese "Brücke" eine Bewegung vermieden, bei welcher die Profilteile aus der Nut demontiert werden können, so dass eine unbeabsichtigte Entfernung der beiden Profilteile aus der Nut ausgeschlossen ist. Andererseits kann auf einfache Weise eine derartige Demontage der Profilteile erfolgen, wenn zunächst das Beschlagelement demontiert wird.

Vorteilhaft ist die Möbelplatte als Massivholzplatte ausgestaltet. Auf diese Weise werden besonders hochwertige und ansehnliche Möbelplatten ermöglicht und insbesondere bei Massivholzplatten ist die Anordnung eines Stabilisierungsprofils besonders wünschenswert.

Die vorschlagsgemäße Ausgestaltung kann bei allen möglichen Möbelplatten vorgesehen sein. Insbesondere vorteilhaft kann dies bei einer Tischplatte vorgesehen sein, und insbesondere kann ein solcher Tisch als Ausziehtisch ausgestaltet sein, so dass das Stabilisierungsprofil nicht nur die Aufgabe der Stabilisierung der Möbelplatte hat, sondern wirtschaftlich vorteilhaft gleichzeitig auch als Führungsschiene genutzt werden kann, beispielsweise um eine Auszugsschiene an die Möbelplatte anschließen zu können.

Ausführungsbeispiele der Erfindung werden nachfolgend anhand der rein schematischen Darstellungen näher erläutert. Dabei zeigt
- Fig. 1: einen Querschnitt durch ein erstes Ausführungsbeispiel einer Möbelplatte,
- Fig. 2: einen Querschnitt durch ein zweites Ausführungsbeispiel, bei welchem die Plattenstärke größer ist als beim ersten Ausführungsbeispiel,
- Fig. 3: einen Querschnitt durch ein Profilteil des Stabilisierungsprofils und die
- Fig. 4 - 6: drei Schritte bei der Montage des Stabilisierungsprofils sowie eines daran anschließenden Beschlages.

In den Zeichnungen ist mit 1 jeweils eine Massivholz-Möbelplatte bezeichnet, in welcher ein Stabilisierungsprofil 2 vorgesehen ist. Das Stabilisierungsprofil 2 besteht aus zwei identischen, symmetrisch angeordneten Profilteilen 3 und einem dazwischen angeordneten Steg 4.

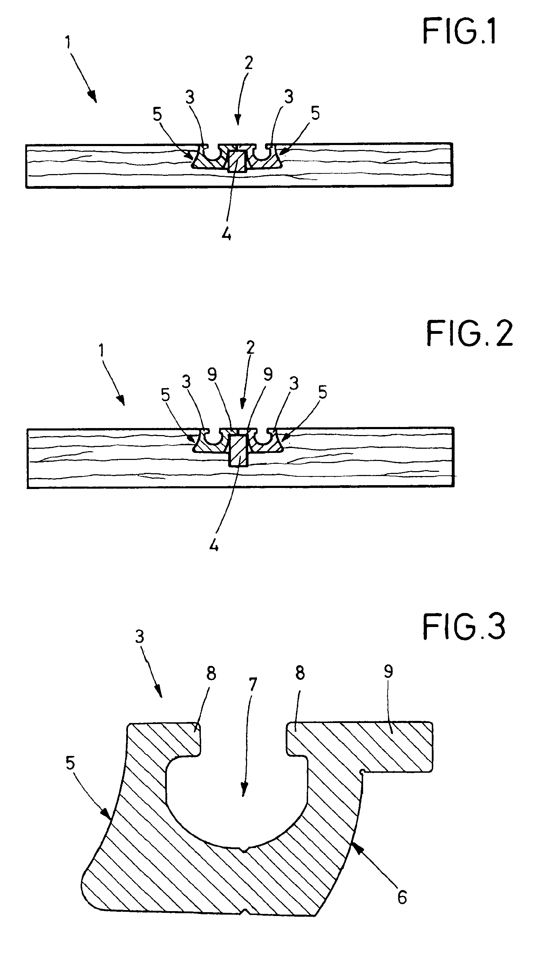

Während Fig. 1 ein Ausführungbeispiel einer Möbelplatte 1 zeigt, die eine Plattenstärke von 20 mm und einen Steg 4 mit einer Höhe von 10 mm aufweist, ist in Fig. 2 eine Möbelplatte 1 mit einer Plattenstärke von 28 mm und mit einen Steg 4 von 15 mm Höhe dargestellt.

Fig. 3 zeigt einen Querschnitt durch ein Profilteil 3. Dabei ist ersichtlich, dass die beiden aufrecht verlaufenden Seitenkanten des Profilteils 3 gebogene und parallel verlaufende Konturabschnitte 5 und 6 aufweisen. Entsprechend der Anordnung der Profilteile 3 innerhalb des Stabilisierungsprofils 2 werden die Konturabschnitte 5 als "äußere" und die Konturabschnitte 6 als "innere" gebogene Konturabschnitte bezeichnet.

Die Profilteile 3 bilden eine Längsnut 7 aus, deren Kontur im Wesentlichen U-förmig verläuft, wobei allerdings zwei Überstände 8 vom Profilteil 3 ausgebildet werden, welche zwischen sich einen Abschnitt der Längsnut 7 mit vergleichsweise verminderter Breite schaffen, so dass Hinterschneidungen in der Längsnut 7 geschaffen werden. Eine Druckleiste 9 schließt an den inneren gebogenen Konturabschnitt 6 an, so dass, wie aus den Fig. 1 und 2 ersichtlich ist, zwei in der Möbelplatte 1 angeordnete Profilteile 3 einander mit den beiden Druckleisten 9 anliegen.

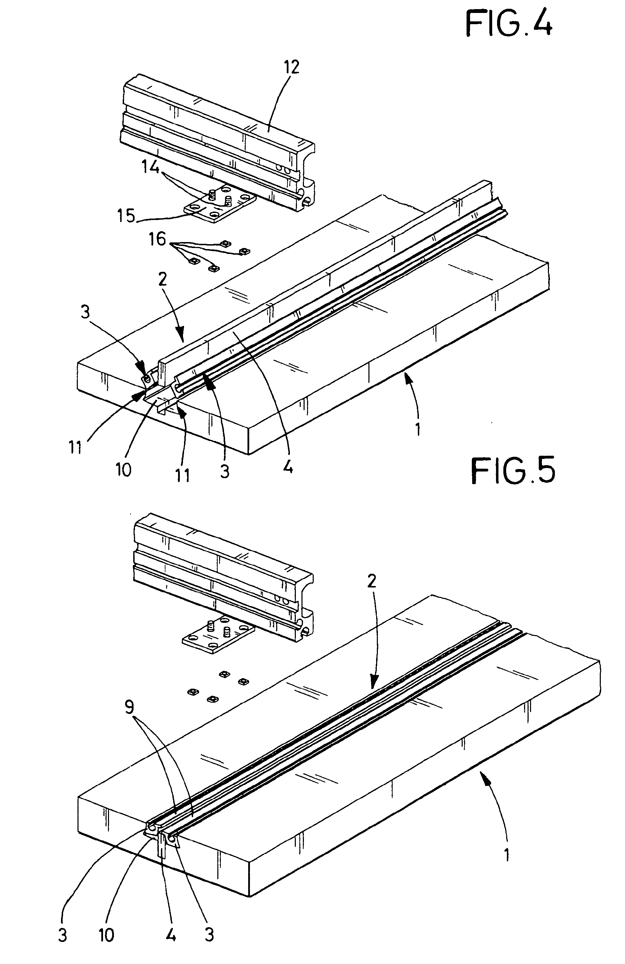

Fig. 4 zeigt eine Möbelplatte 1 und eine darin vorgesehene Nut 10, die zur Aufnahme des Stabilisierungsprofils 2 dient. Die Nut 10 weist zwei gebogen verlaufende Randbereiche 11 auf, deren Verlauf mit dem der äußeren gebogenen Konturabschnitte 5 der Profilteile 3 korrespondiert, und im mittleren Bereich weist die Nut 10 einen besonders tief in die Möbelplatte 1 hinein verlaufenden Nutgrund auf, der zur Aufnahme des Steges 4 vorgesehen ist.

Fig. 4 zeigt die Möbelplatte 1 zu Beginn des Einsetzens des Stabilisierungsprofils 2. Die beiden Profilteile 3 sind entgegengesetzt und jeweils winkelig zur Oberfläche der Möbelplatte 1 ausgerichtet, so dass sie im weiteren Verlauf der Montage mit entgegen gesetzten Schwenkbewegungen in die Nut 10 eingeschwenkt werden können, wobei jeweils ein äußerer gebogener Konturabschnitt 5 eines Profilteils 3 an einem gebogenen Randbereich 11 der Nut 10 entlang gleitet. Dabei wird gleichzeitig der Steg 4 in die Nut 10 gesenkt.

Fig. 5 zeigt den Montagevorgang des Stabilisierungsprofils 2 kurz vor dessen Ende: Der Steg 4 und das rechts dargestellte Profilteil 3 befinden sich bereits in ihrer endgültigen Position, während das links dargestellte Profilteil 3 noch eine restliche Schwenkbewegung ausführen muss, bis es vollständig in der Nut 10 liegt.

Wenn ideser Montagevorgang beendet ist, liegen die beiden Druckleisten 9 der beiden Profilteile 3 einander an, so dass die beiden Profilteile 3 unter einer gewissen Vorspannung innerhalb der Nut 10 gehalten sind.

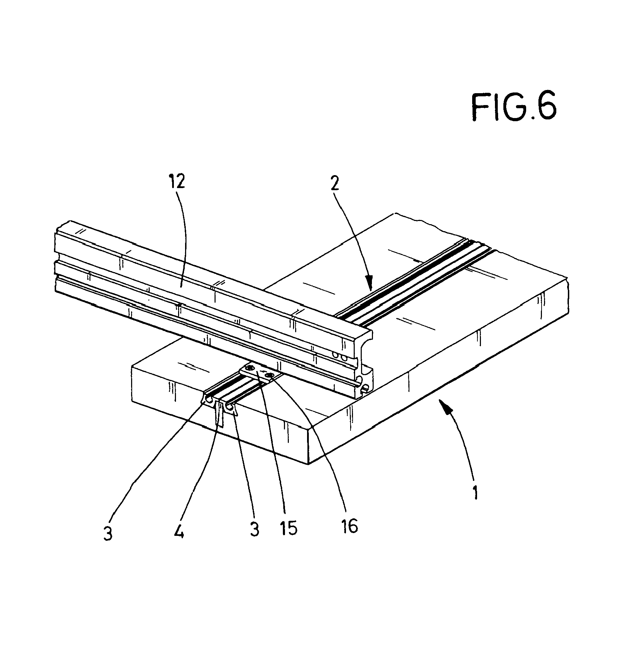

In den Fig. 4 und 5 sind in auseinander gezogener Darstellung weitere Elemente dargestellt, die an die Möbelplatte 1 angeschlossen werden sollen: Eine Auszugsschiene 12 kann über Schrauben 14 mit einem Beschlagelement 15 in Form einer Beschlagplatte verbunden werden, wobei das Beschlagelement 15 vier Aufnahmebohrungen zur Aufnahme von Nutsteinen 16 aufweist. Die Nutsteine 16 sind derart geformt, dass sie sich in die Längsnuten 7 der beiden Profilteile 3 erstrecken können, wenn sie in Längsrichtung, also vom Stirnende her, in die Längsnuten 7 der Profilteile 3 eingeführt werden. Aufgrund der hinterschnittenen Kontur der Längsnuten 7 sind die Nutsteine 16 verliersicher in den Profilteilen 3 gehalten, wie anhand von Fig. 6 ersichtlich ist. Aufgrund der gegenläufigen Bewegung der beiden Profilteile 3, die zur Demontage des Stabilisierungsprofils 2 erforderlich wäre, verhindert das Beschlagelement 15 mit seinen Nutsteinen 16 eine ungewollte Demontage des Stabilisierungsprofils 2.

## Patentansprüche

1. Möbelplatte aus Holz,
mit einer Nut,
und mit einem in der Nut angeordneten, die Möbelplatte aussteifenden Stabilisierungsprofil,
**dadurch gekennzeichnet,**
**dass** das Stabilisierungsprofil (2), im Querschnitt gesehen, zwei separate Profilteile (3) mit jeweils einem gebogenen Konturabschnitt (5, 6) aufweist,
und **dass** die Nut (10) Randbereiche (11) aufweist, welche den gebogenen Konturabschnitten (5) der Profilteile (3) anliegen,
derart, dass die beiden Profilteile (3) mittels einer Schwenkbewegung aus der Nut (10) herausschwenkbar sind.

2. Möbelplatte nach Anspruch 1,
**dadurch gekennzeichnet,**
**dass**, in Längsrichtung des Stabilisierungsprofils (2) gesehen, zwischen den beiden Profilteilen (3) ein Steg (4) als ein drittes Element des Stabilisierungsprofils (2) vorgesehen ist.

3. Möbelplatte nach Anspruch 2,
**dadurch gekennzeichnet,**
**dass** sich der Steg (4) tiefer in die Möbelplatte (1) erstreckt als die beiden Profilteile (3).

4. Möbelplatte nach Anspruch 2 oder 3,
**dadurch gekennzeichnet,**
**dass** der Steg (3) einen rechteckigen Querschnitt aufweist.

5. Möbelplatte nach einem der vorhergehenden Ansprüche,
**dadurch gekennzeichnet,**
**dass** die Nut (10) Randbereiche (11) aufweist, welche zu den gebogenen Konturabschnitten (5) der Profilteile (3) korrespondierend gebogen verlaufen, und welche jeweils den gebogenen Konturabschnitten (5) der Profilteile (3) vollflächig anliegen.

6. Möbelplatte nach einem der vorhergehenden Ansprüche,
**dadurch gekennzeichnet,**
**dass** wenigstens eins der beiden Profilteile (3) eine Längsnut (7) aufweist, deren Querschnitt eine die verliersichere Aufnahme eines Nutsteins (16) ermöglichende Hinterschneidung aufweist.

7. Möbelplatte nach Anspruch 6,
**dadurch gekennzeichnet,**
**dass** beide Profilteile (3) eine derartige Längsnut (7) aufweisen, wobei ein Beschlagelement (15) vorgesehen ist, welches wenigstens zwei Nutsteine (16) aufweist und in jeder der beiden Längsnuten (7) ein Nutstein (16) dieses Beschlagelements (15) angeordnet ist.

8. Möbelplatte nach einem der vorhergehenden Ansprüche,
**dadurch gekennzeichnet,**
**dass** die beiden Profilteile (3) unter Vorspannung in der Nut (10) gehalten sind.

9. Möbelplatte nach einem der vorhergehenden Ansprüche,
**dadurch gekennzeichnet,**
**dass** die Möbelplatte (1) als Massivholzplatte ausgestaltet ist.

10. Möbelplatte nach einem der vorhergehenden Ansprüche,
**dadurch gekennzeichnet,**
**dass** die Schwenkbeweglichkeit der beiden Profilteile (3) im Sinne gegenläufiger Schwenkbewegungen ausgestaltet ist.

11. Tisch, mit einer Tischplatte, welche als Möbelplatte (1) nach einem der vorhergehenden Ansprüche ausgestaltet ist.

12. Tisch nach Anspruch 11,
**dadurch gekennzeichnet,**
**dass** der Tisch als Ausziehtisch ausgestaltet ist, mit einer Tischplatte und einer an die Tischplatte anschließbaren Verlängerungs- oder Ausziehplatte.
